# FASCICULE DE BREVET EUROPEEN

(11) **EP 1 716 347 B1**
(45) Date de publication et mention de la délivrance du brevet: **19.03.2008**
(21) Numéro de dépôt: 05717707.3
(22) Date de dépôt: 08.02.2005
(51) Int. Cl.: F16D 13/58

(54) **EMBRAYAGE A MECANISME PERFECTIONNE ET PROCEDE DE MONTAGE DE CET EMBRAYAGE**
MIT EINEM VERBESSERTEN MECHANISMUS VERSEHENE KUPPLUNG UND VERFAHREN ZUM MONTIEREN DER KUPPLUNG
CLUTCH PROVIDED WITH AN IMPROVED MECHANISM AND METHOD FOR MOUNTING SAID CLUTCH

(30) Priorité: 18.02.2004 FR 0450298
(43) Date de publication de la demande: 02.11.2006
(73) Titulaire: Valeo Embrayages, 80009 Amiens (FR)
(72) Inventeur: CALAIS, Jean-Pierre, F-80090 Amiens (FR)
(86) Numéro de dépôt international: PCT/FR2005/050076
(87) Numéro de publication internationale: WO 2005/080816

(56) Documents cités:
- DE-A- 2 121 879
- FR-A- 2 376 969
- FR-A- 2 459 904
- FR-A- 2 547 001
- PATENT ABSTRACTS OF JAPAN vol. 0041, no. 08 (M-024), 5 août 1980 (1980-08-05) & JP 55 065730 A (AISIN SEIKI CO LTD), 17 mai 1980 (1980-05-17)

## Description

L'invention concerne un embrayage à mécanisme perfectionné et un procédé de montage de cet embrayage.

Dans un véhicule automobile, un embrayage est destiné à coupler des organes rotatifs menant et mené d'axes de rotation sensiblement alignés. L'organe rotatif menant est couplé au moteur, plus particulièrement à un vilebrequin du moteur, et l'organe rotatif mené est généralement couplé à un arbre de boîte de vitesses.

L'embrayage comporte au moins un mécanisme entraîné en rotation par l'organe menant. Ce mécanisme comprend un couvercle, un diaphragme et un plateau de pression, tous liés en rotation avec l'organe menant.

Afin de coupler les organes rotatifs menant et mené, le diaphragme enserre un disque de friction, lié en rotation avec l'organe rotatif mené, entre le plateau de pression et un plateau de réaction solidaire en rotation du couvercle.

On connaît déjà dans l'état de la technique, notamment d'après FR-A-2 765 285 (FR-97 08252), un embrayage, notamment pour véhicule automobile, du type comprenant un mécanisme comportant un couvercle dans lequel est logé un diaphragme destiné à coopérer avec un plateau de pression, ce diaphragme étant articulé entre des première et seconde parties d'appui et d'articulation portées par le couvercle, la première partie étant formée par un organe d'appui porté par le couvercle.

Le diaphragme forme un levier comportant un axe d'articulation matérialisé par les première et seconde parties d'appui et d'articulation. Ainsi, dans le cas d'un mécanisme de type poussé, le diaphragme forme un levier du premier genre, c'est à dire un levier soumis à une force d'action et à une force de réaction, appliquées de part et d'autre de l'axe d'articulation.

Le diaphragme est susceptible de basculer autour de l'axe d'articulation entre une position embrayée, vers laquelle ce diaphragme est rappelé élastiquement, et une position débrayée, vers laquelle ce diaphragme est déplacé par une butée de commande à l'encontre de sa force de rappel.

En position embrayée, le diaphragme est guidé en rotation par la première partie d'appui et d'articulation, et prend appui sur la seconde partie d'appui et d'articulation de manière à exercer une charge sur le plateau de pression.

En position débrayée, le diaphragme est guidé en rotation par la seconde partie d'appui et d'articulation, et prend appui sur la première partie d'appui et d'articulation de manière à annuler la charge exercée sur le plateau de pression.

Les parties d'appui et d'articulation forment une articulation de type rigide ou élastique.

Dans le cas d'une articulation rigide, l'écartement des parties d'appui et d'articulation est fixe, le diaphragme étant intercalé entre ces parties généralement avec jeu. Ce jeu permet de limiter les frottements entre le diaphragme et les parties d'appui et d'articulation mais peut être la cause de vibrations et de bruits. Ce jeu, de préférence inférieur à un dixième de millimètre afin d'empêcher les vibrations et les bruits, requiert des tolérances sévères de fabrication des éléments concernés.

Dans le cas d'une articulation élastique, une des parties d'appui et d'articulation est rappelée élastiquement vers l'autre des parties d'appui et d'articulation, de façon à serrer élastiquement le diaphragme entre ces parties. On évite ainsi l'apparition d'un jeu entre le diaphragme et les parties d'appui et d'articulation malgré l'usure de ces éléments. Une articulation de type élastique est généralement plus économique qu'une articulation de type rigide puisqu'elle permet une tolérance plus grande de l'écartement entre les parties d'appui et d'articulation.

On connaît déjà dans l'état de la technique un embrayage du type précité, dans lequel l'organe d'appui, formant la première partie d'appui et d'articulation, est une rondelle à effet élastique axial, et la seconde partie d'appui et d'articulation est formée par une nervure annulaire ménagée sur le couvercle. Ces première et seconde parties d'appui et d'articulation forment ainsi une articulation élastique du diaphragme.

La rondelle élastique est généralement portée par des moyens comprenant des pattes ménagées sur le couvercle. Chaque patte est formée par une portion du couvercle, pliée deux fois de manière à présenter une première partie sensiblement axiale et une seconde partie sensiblement radiale.

Chaque patte, obtenue par pliage, forme un logement en forme générale de "U" pour la rondelle élastique. Habituellement, la rondelle élastique est placée sur la partie axiale de la patte avant la formation du second pli. Le montage de cette rondelle élastique est donc relativement complexe puisqu'il requiert une première opération de mise en place de l'organe élastique sur la partie axiale des pattes suivie d'une seconde opération de formation du second pli des pattes.

En outre, les dimensions du logement en "U" formé par la patte sont relativement difficiles à maîtriser du fait que les opérations de pliage successives de la patte sont relativement peu précises. Le second pli est notamment difficile à réaliser avec précision dans le cas d'un couvercle d'épaisseur relativement importante, par exemple d'épaisseur supérieure à 4 mm.

De plus, le bord délimitant le contour intérieur de la rondelle élastique a généralement tendance à s'incruster dans le second pli des pattes du couvercle. Ainsi, ceci limite dans certains cas l'efficacité du serrage de la rondelle élastique.

Par ailleurs, il convient de concilier l'encombrement de la partie sensiblement radiale de la patte avec la course du plateau de pression. Il est donc nécessaire de ménager un dégagement dans ce plateau de pression de manière à ce que cette partie sensiblement radiale de la patte puisse se loger dans ce dégagement lorsque le plateau de pression est en fin de course.

Ce dégagement est généralement ménagé dans une zone du plateau de pression soumise à de fortes températures dans certaines conditions d'utilisation de l'embrayage. Le plateau de pression, aminci par le dégagement, atteint alors de hautes températures ainsi que des gradients de température élevés, ce qui est nuisible à son bon fonctionnement et à sa durée de vie.

L'invention a notamment pour but de simplifier le montage de la rondelle élastique, d'assurer un serrage précis du diaphragme et de limiter l'encombrement des moyens portant la rondelle élastique.

A cet effet, l'invention a pour objet un embrayage du type précité comprenant des moyens d'encliquetage de l'organe d'appui sur le couvercle, le couvercle étant muni de pattes s'étendant axialement vers l'intérieur du couvercle, sur lesquelles l'organe élastique est encliqueté

Les moyens d'encliquetage de l'organe d'appui, formant la première partie d'appui et d'articulation du diaphragme, sur le couvercle permettent de monter cet organe d'appui dans l'embrayage en une seule opération d'encliquetage.

Les moyens d'encliquetage sont relativement simples et économiques à fabriquer. Ces moyens d'encliquetage permettent de positionner précisément l'organe d'appui par rapport au couvercle afin d'assurer une bonne qualité de serrage du diaphragme.

Par ailleurs, les moyens d'encliquetage sont relativement peu encombrant, ce qui permet d'augmenter le cas échéant l'épaisseur du plateau de pression, de réduire les variations d'épaisseur de ce plateau de pression et/ou de réduire l'encombrement axial et radial du mécanisme.

Un embrayage selon l'invention peut en outre comporter l'une ou plusieurs des caractéristiques suivantes :
- l'organe d'appui exerce un effort élastique axial sur le diaphragme ;
- l'organe d'appui comporte une rondelle de type Belleville ;
- chaque patte est munie d'un évidement délimitant une butée d'encliquetage de l'organe d'appui ;
- chaque patte est munie d'une extrémité libre portant une rampe pour faciliter l'encliquetage de l'organe d'appui sur les pattes ;
- la rampe est formée par amincissement de l'extrémité libre ;
- la rampe est formée par pliage de l'extrémité libre ;
- le couvercle est en tôle emboutie, chaque patte étant formée par découpage et pliage d'une portion du couvercle ;
- chaque patte est formée par une portion sensiblement radiale du couvercle pliée pour lui donner une orientation sensiblement axiale ;
- chaque patte est formée par une portion sensiblement tangentielle du couvercle pliée pour lui donner une orientation sensiblement axiale ;
- le diaphragme est muni de doigts de commande à effet élastique axial, chaque patte du couvercle ayant des dimensions adaptées pour permettre à la patte de s'étendre axialement entre deux doigts successifs ;
- le diaphragme est muni de bossages destinés à augmenter l'inertie et la raideur de ce diaphragme ;
- l'organe d'appui comprend des enfoncements, créant des dégagements axiaux de matière, et pouvant notamment former des dégagements complémentaires pour les bossages du diaphragme ; et
- la seconde partie d'appui et d'articulation est formée par une nervure annulaire ménagée sur le couvercle.

L'invention a également pour objet un procédé de montage d'un embrayage du type précité, caractérisé en ce que :
- on introduit le diaphragme dans le couvercle, de manière à ce qu'il prenne appui sur la seconde partie d'appui ;
- on encliquette l'organe d'appui portant la première partie d'appui sur le couvercle, de manière à ce que le diaphragme soit articulé entre les première et seconde parties d'appui.

L'invention sera mieux comprise à la lecture de la description qui va suivre, donnée uniquement à titre d'exemple et faite en se référant aux dessins annexés dans lesquels :
- la figure 1 est une vue en coupe axiale d'un embrayage selon un premier mode de réalisation de l'invention ;
- la figure 2 est une vue similaire à la figure 1 montrant une variante de réalisation d'une rampe des moyens d'encliquetage de l'embrayage selon le premier mode de réalisation de l'invention ;
- la figure 3 est une vue similaire à celles des figures 1 et 2 d'un embrayage selon un deuxième mode de réalisation de l'invention;
- la figure 4 est une vue de face du couvercle et du diaphragme de l'embrayage représenté sur la figure 3.

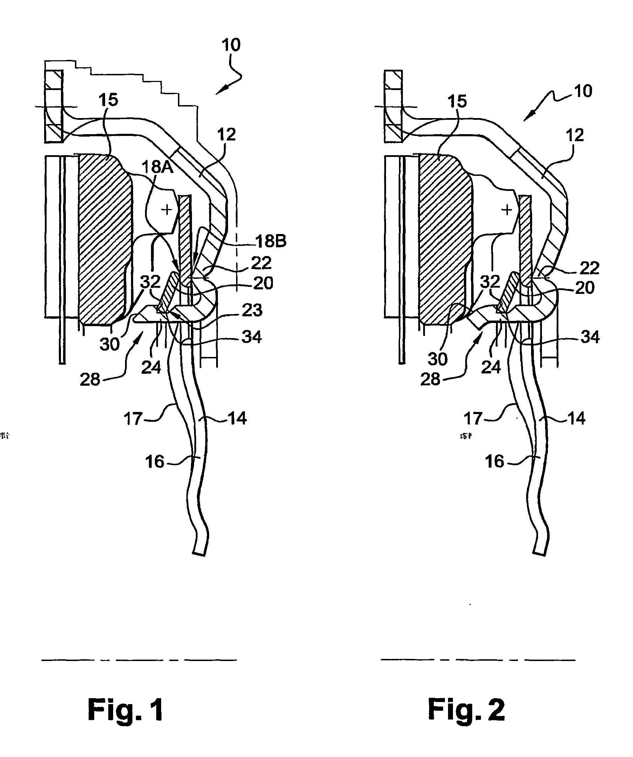

On a représenté sur la figure 1 un embrayage pour véhicule automobile selon un premier mode de réalisation de l'invention, comprenant un mécanisme désigné par la référence générale 10.

Le mécanisme 10 comporte un couvercle 12 dans lequel est logé un diaphragme 14, destiné à coopérer avec un plateau de pression 15.

Ce diaphragme 14 est muni de doigts de commande 16 à effet élastique axial. Chaque doigt 16 est muni d'un bossage 17 s'étendant radialement sur ce doigt 16, destiné à augmenter l'inertie et la raideur du diaphragme 14.

Le diaphragme 14 est articulé entre des première 18A et seconde 18B parties d'appui et d'articulation, portées par le couvercle 12.

La première partie d'appui et d'articulation 18A est formée par un organe d'appui 20 porté par le couvercle 12. Cet organe d'appui 20 exerce un effort élastique axial sur le diaphragme 14, de manière à former une articulation du type articulation élastique. Par exemple, l'organe d'appui 20 comporte une rondelle de type Belleville de forme générale tronconique.

Cet organe d'appui 20 peut comporter des enfoncements formant des dégagements complémentaires pour les bossages 17 du diaphragme 14, de manière à concilier l'encombrement des bossages 17 avec les déplacements du diaphragme 14.

En variante, les enfoncements de l'organe d'appui 20 peuvent être indépendants des bossages 17. Ces enfoncements ont alors pour but de réduire les surfaces de contact entre l'organe d'appui 20 et le diaphragme 14, en créant des dégagements axiaux de matière réduisant les frottements entre l'organe d'appui 20 et le diaphragme 14 lorsque ce diaphragme 14 se déplace.

La seconde partie d'appui et d'articulation 18B est formée par une nervure annulaire 22 ménagée sur le couvercle 12.

Le mécanisme 10 comprend des moyens 23 d'encliquetage de l'organe d'appui 20 sur le couvercle 12.

Selon le premier mode de réalisation de l'invention, représenté sur la figure 1, les moyens d'encliquetage 23 comprennent des pattes 24, ménagées sur le couvercle 12, s'étendant axialement vers l'intérieur de ce couvercle 12. L'organe 20 est encliqueté sur ces pattes 24.

En général, le couvercle 12 est en tôle emboutie, chaque patte 24 étant formée par découpage et pliage d'une portion de ce couvercle 12.

Ainsi, chaque patte 24 est formée par une portion sensiblement radiale du couvercle 12, pliée selon un procédé de pliage classique pour lui donner une orientation sensiblement axiale.

Chaque patte 24 est munie d'une extrémité libre 28, portant une rampe 30 généralement formée par amincissement de l'extrémité libre 28 (voir figure 1). Cette rampe 30 est destinée à faciliter l'emboîtement de l'organe d'appui 20 sur les pattes 24.

En outre, chaque patte 24 est munie d'une butée 32 d'encliquetage de l'organe d'appui 20. Cette butée d'encliquetage 32 est délimitée par un évidemment 34.

On peut noter que la rampe 30 et la butée d'encliquetage 32 sont ménagées sur la patte 24 avant le pliage de celle ci dans la direction axiale, par une déformation à la presse.

La rampe 30 et la butée d'encliquetage 32 permettent donc un encliquetage de l'organe d'appui 20 sur le couvercle 12, garantissant un positionnement précis de l'organe d'appui 20 par rapport au couvercle 12, afin d'assurer une bonne qualité de serrage du diaphragme 14 par les parties d'appui et d'articulation 18A et 18B.

Selon une variante de ce premier mode de réalisation, représentée sur la figure 2, la rampe 30 peut être formée par pliage de l'extrémité libre 28 de la patte 24.

On peut noter que le fait que l'organe d'appui 20 soit simplement encliqueté sur le couvercle 12 facilite le montage de l'embrayage. En effet, le procédé de montage du diaphragme 14 selon l'invention consiste à :
- introduire le diaphragme 14 dans le couvercle 12, de manière à ce qu'il prenne appui sur la seconde partie d'appui 18B ;
- encliqueter l'organe d'appui 20 portant la première partie 18A sur le couvercle 12, en poussant cet organe 20 vers le diaphragme 14, et en déformant élastiquement les pattes 24 du couvercle, de manière à ce que le diaphragme 14 soit articulé entre les première 18A et seconde 18B parties d'appui.

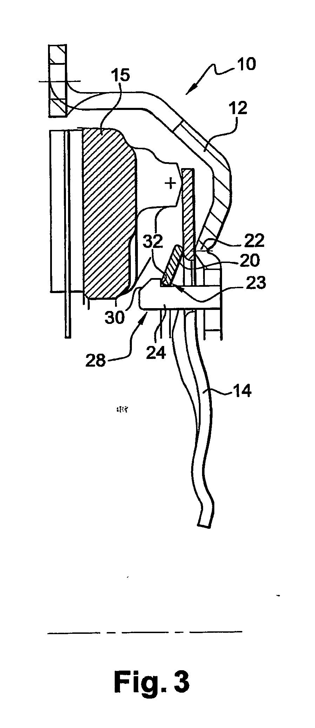

On a représenté sur les figures 3 à 5 un embrayage selon des deuxième et troisième modes de réalisation de l'invention. Sur ces figures, les éléments analogues à ceux des figures 1 et 2 sont désignés par des références identiques.

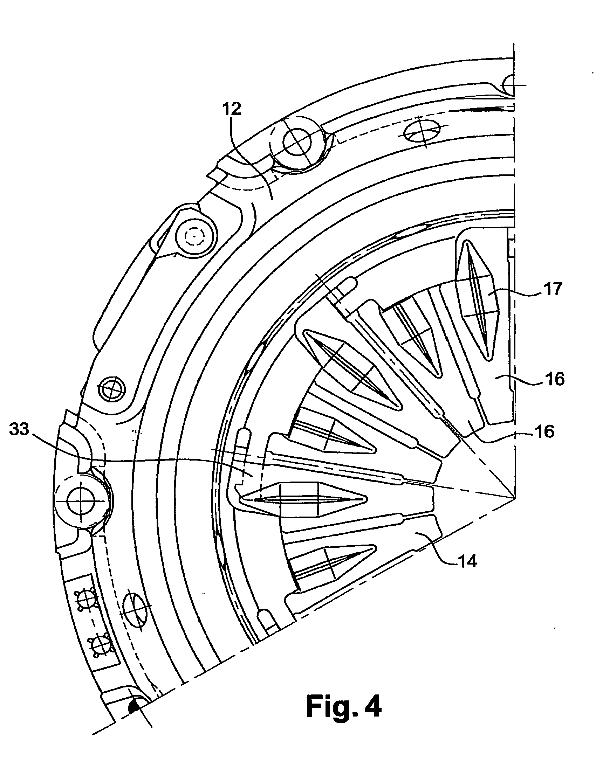

Selon le deuxième mode de réalisation, représenté sur les figures 3 et 4, chaque patte 24 est formée par une portion sensiblement tangentielle du couvercle 12, la direction tangentielle étant définie comme perpendiculaire aux directions habituelles axiale et radiale du couvercle 12.

Une portion tangentielle 33 telle que représentée en traits interrompus sur la figure 4 est pliée selon un procédé de pliage classique pour lui donner une orientation sensiblement axiale. Chaque patte 24 a ainsi des dimensions adaptées pour lui permettre de s'étendre axialement entre deux doigts 16 successifs du diaphragme 14. Il n'est donc pas nécessaire de ménager des passages dans le diaphragme 14 pour les pattes 24.

Selon le deuxième mode de réalisation, la rampe 30 et la butée d'encliquetage 32 sont formées lors du découpage de la portion tangentielle 33.

On peut noter que les pattes 24 du couvercle 12 dans le cas des premier et deuxième modes de réalisation ont tendance à se replier en s'éloignant de l'axe du mécanisme sous l'effet de la force centrifuge induite par la rotation de ce mécanisme autour de cet axe. Le maintient de l'organe d'appui 20 contre le diaphragme 14 est ainsi favorisé.

L'organe d'appui 20 et les moyens d'encliquetage 23 de l'invention sont relativement peu encombrants. Il peut cependant rester nécessaire de ménager un dégagement dans le plateau de pression de manière à ce qu'il puisse se déplacer sans être gêné par l'organe d'appui 20 ou par les pattes 24. Toutefois, ce dégagement reste relativement peu important et ne nuit pas au bon fonctionnement de l'embrayage.

Parmi les avantages de l'invention, on peut noter les suivants.

L'invention permet notamment de relier le diaphragme au couvercle au moyen d'une articulation élastique performante, sans jeu. En effet, le serrage du diaphragme entre les deux parties de son articulation est bien maîtrisé car, grâce au moyens d'encliquetage, l'organe d'appui est positionné, notamment suivant la direction axiale, de manière précise par rapport au couvercle. De plus, l'articulation résiste aux charges élevées dues notamment à un diaphragme de forte raideur.

Par ailleurs, on peut noter que les procédés de fabrication et de montage du mécanisme d'un embrayage selon l'invention sont relativement simples.

On peut noter enfin que les encombrements axial et radial du mécanisme, relativement faibles, ont peu d'impact sur la forme du plateau de pression ce qui favorise la standardisation de ce dernier.

## Revendications

1. Embrayage, notamment pour véhicule automobile, du type comprenant un mécanisme (10) comportant un couvercle (12) dans lequel est logé un diaphragme (14) destiné à coopérer avec un plateau de pression (15), le diaphragme (14) étant articulé entre des première (18A) et seconde (18B) parties d'appui et d'articulation portées par le couvercle (12), la première partie (18A) étant formée par un organe d'appui (20) porté par le couvercle (12), des moyens (23) d'encliquetage de l'organe d'appui (20) sur le couvercle (12), **caractérisé en ce que** le couvercle (12) est muni de pattes (24) s'étendant axialement vers l'intérieur du couvercle (12), sur lesquelles l'organe d'appui (20) est encliqueté.

2. Embrayage selon la revendication 1, **caractérisé en ce que** l'organe d'appui (20) exerce un effort élastique axial sur le diaphragme (14).

3. Embrayage selon la revendication 2, **caractérisé en ce que** l'organe d'appui (20) comporte une rondelle de type Belleville.

4. Embrayage selon l'une des revendications 1 à 3, **caractérisé en ce que** chaque patte (24) est munie d'un évidement (34) délimitant une butée d'encliquetage (32) de l'organe d'appui (20).

5. Embrayage selon l'une des revendications 1 à 4, **caractérisé en ce que** chaque patte (24) est munie d'une extrémité libre (28) portant une rampe (30) pour faciliter l'encliquetage de l'organe d'appui (20) sur les pattes (24).

6. Embrayage selon la revendication 5, **caractérisé en ce que** la rampe (30) est formée par amincissement de l'extrémité libre (28).

7. Embrayage selon la revendication 5, **caractérisé en ce que** la rampe (30) est formée par pliage de l'extrémité libre (28).

8. Embrayage selon l'une quelconque des revendications 1 à 7, **caractérisé en ce que** le couvercle (12) est en tôle emboutie, chaque patte (24) étant formée par découpage et pliage d'une portion du couvercle (12).

9. Embrayage selon la revendication 8, **caractérisé en ce que** chaque patte (24) est formée par une portion sensiblement radiale du couvercle (12) pliée pour lui donner une orientation sensiblement axiale.

10. Embrayage selon la revendication 8, **caractérisé en ce que** chaque patte (24) est formée par une portion (33) sensiblement tangentielle du couvercle (12) pliée pour lui donner une orientation sensiblement axiale.

11. Embrayage selon la revendication 10, **caractérisé en ce que** le diaphragme (14) est muni de doigts de commande (16) à effet élastique axial, chaque patte (24) du couvercle ayant des dimensions adaptées pour permettre à la patte (24) de s'étendre axialement entre deux doigts (16) successifs.

12. Embrayage selon l'une quelconque des revendications précédentes, **caractérisé en ce que** le diaphragme (14) est muni de bossages (17) destinés à augmenter l'inertie et la raideur de ce diaphragme (14).

13. Embrayage selon la revendication 12, **caractérisé en ce que** l'organe d'appui (20) comprend des enfoncements, créant des dégagements axiaux de matière, et pouvant notamment former des dégagements complémentaires pour les bossages (17) du diaphragme (14).

14. Embrayage selon l'une quelconque des revendications précédentes, **caractérisé en ce que** la seconde partie d'appui et d'articulation (18B) est formée par une nervure annulaire (22) ménagée sur le couvercle (12).

15. Procédé de montage d'un embrayage selon l'une quelconque des revendications précédentes, **caractérisé en ce que** :
- on introduit le diaphragme (14) dans le couvercle (12), de manière à ce qu'il prenne appui sur la seconde partie d'appui (18B) ;
- on encliquette l'organe d'appui (20) portant la première partie d'appui (18A) sur le couvercle (12), de manière à ce que le diaphragme (14) soit articulé entre les première (18A) et seconde (18B) parties d'appui.

## Claims

1. Clutch, in particular for a motor vehicle, of the type comprising a mechanism (10) including a cover (12), in which there is accommodated a diaphragm (14) which is designed to co-operate with a pressure plate (15), the diaphragm (14) being articulated between the first (18A) and second (18B) articulation and support parts which are supported by the cover (12), the first part (18A) being formed by a support unit (20) which is supported by the cover (12), and means (23) for snapping the support unit (20) onto the cover (12), **characterised in that** the cover (12) is provided with lugs (24) which extend axially towards the interior of the cover (12), onto which lugs the support unit (20) is snapped.

2. Clutch according to claim 1, **characterised in that** the support unit (20) exerts axial resilient force on the diaphragm (14).

3. Clutch according to claim 2, **characterised in that** the support unit (20) comprises a washer of the Belleville type.

4. Clutch according to one of claims 1 to 3, **characterised in that** each lug (24) is provided with a recess (34) which delimits a snap-on stop (32) of the support unit (20).

5. Clutch according to one of claims 1 to 4, **characterised in that** each lug (24) is provided with a free end (28) which supports a ramp (30) in order to facilitate snapping of the support unit (20) onto the lugs (24).

6. Clutch according to claim 5, **characterised in that** the ramp (30) is formed by thinning down of the free end (28).

7. Clutch according to claim 5, **characterised in that** the ramp (30) is formed by folding of the free end (28).

8. Clutch according to any one of claims 1 to 7, **characterised in that** the cover (12) is made of pressed metal plate, each lug (24) being formed by cutting and folding of a portion of the cover (12).

9. Clutch according to claim 8, **characterised in that** each lug (24) is formed by a substantially radial portion of the cover (12) which is folded in order to provide it with substantially axial orientation.

10. Clutch according to claim 8, **characterised in that** each lug (24) is formed by a substantially tangential portion (33) of the cover (12) which is folded in order to provide it with substantially axial orientation.

11. Clutch according to claim 10, **characterised in that** the diaphragm (14) is provided with control fingers (16) with an axial resilient effect, each lug (24) of the cover having dimensions suitable for allowing the lug (24) to extend axially between two successive fingers (16).

12. Clutch according to any one of the preceding claims, **characterised in that** the diaphragm (14) is provided with bosses (17) which are designed to increase the inertia and rigidity of this diaphragm (14).

13. Clutch according to claim 12, **characterised in that** the support unit (20) comprises indentations which create axial undercuts in the material, and in particular can form complementary undercuts for the bosses (17) of the diaphragm (14).

14. Clutch according to any one of the preceding claims, **characterised in that** the second articulation and support part (18B) is formed by an annular rib (22) provided on the cover (12).

15. Method for fitting a clutch according to any one of the preceding claims, **characterised in that**:
- the diaphragm (14) is introduced into the cover (12) such that it is supported on the second support part (18B);
- the support unit (20) which supports the first support part (18A) is snapped onto the cover (12), such that the diaphragm (14) is articulated between the first (18A) and second (18B) support parts.

## Patentansprüche

1. Kupplung, insbesondere für Kraftfahrzeuge, mit einem Mechanismus (10), der einen Deckel (12) umfasst, in welchem eine zum Zusammenwirken mit einer Druckplatte (15) bestimmte Membranfeder (14) angeordnet ist, wobei die Membranfeder (14) zwischen einem ersten (18A) und einem zweiten (18B) Auflage- und Gelenkteil angelenkt ist, welche von dem Deckel (12) getragen werden, wobei der erste Teil (18A) durch ein vom Deckel (12) getragenes Auflageorgan (20) gebildet ist, und wobei Rastmittel (23) für das Auflageorgan (20) am Deckel (12) vorgesehen sind, **dadurch gekennzeichnet, dass** der Deckel (12) mit Laschen (24) versehen ist, die sich axial ins Innere des Deckels (12) erstrecken und auf denen das Auflageorgan (20) eingerastet ist.

2. Kupplung nach Anspruch 1, **dadurch gekennzeichnet, dass** das Auflageorgan (20) eine elastische Axialkraft auf die Membranfeder (14) ausübt.

3. Kupplung nach Anspruch 2, **dadurch gekennzeichnet, dass** das Auflageorgan (20) eine Tellerfeder umfasst.

4. Kupplung nach einem der Ansprüche 1 bis 3, **dadurch gekennzeichnet, dass** jede Lasche (24) mit einer Ausnehmung (34) versehen ist, die ein Rastlager (32) des Auflageorgans (20) begrenzt.

5. Kupplung nach einem der Ansprüche 1 bis 4, **dadurch gekennzeichnet, dass** jede Lasche (24) mit einem freien Ende (28) versehen ist, das eine Rampe (30) zur Erleichterung des Einrastens des Auflageorgans (20) auf den Laschen (24) aufweist.

6. Kupplung nach Anspruch 5, **dadurch gekennzeichnet, dass** die Rampe (30) durch Dünnerwerden des freien Endes (28) gebildet ist.

7. Kupplung nach Anspruch 5, **dadurch gekennzeichnet, dass** die Rampe (30) durch Biegen des freien Endes (28) gebildet ist.

8. Kupplung nach einem der Ansprüche 1 bis 7, **dadurch gekennzeichnet, dass** der Deckel (12) aus tiefgezogenem Blech besteht, wobei jede Lasche (24) durch Schneiden und Biegen eines Abschnitts des Deckels (12) gebildet ist.

9. Kupplung nach Anspruch 8, **dadurch gekennzeichnet, dass** jede Lasche (24) durch einen in etwa radialen Abschnitt des Deckels (12) gebildet ist, welcher gebogen ist um ihm eine in etwa axiale Ausrichtung zu geben.

10. Kupplung nach Anspruch 8, **dadurch gekennzeich**n e t , dass jede Lasche (24) durch einen in etwa tangentialen Abschnitt des Deckels (12) gebildet ist, der gebogen ist um ihm eine in etwa axiale Ausrichtung zu geben.

11. Kupplung nach Anspruch 10, **dadurch gekennzeichnet, dass** die Membranfeder (14) mit axial elastisch wirkenden Steuerfingern (16) versehen ist, wobei jede Lasche (24) des Deckels angepasste Abmessungen hat um der Lasche (24) zu gestatten, sich axial zwischen zwei aufeinanderfolgenden Fingern (16) zu erstrecken.

12. Kupplung nach einem der vorangehenden Ansprüche, **dadurch gekennzeichnet, dass** die Membranfeder (14) mit Buckeln (17) versehen ist, die dazu bestimmt sind, die Trägheit und die Steifheit dieser Membranfeder (14) zu erhöhen.

13. Kupplung nach Anspruch 12, **dadurch gekennzeichnet, dass** das Auflageorgan (20) Eintiefungen aufweist, die axiale Materialbefreiungen herstellen, und insbesondere komplementäre Ausnehmungen für die Buckel (17) der Membranfeder (14) bilden können.

14. Kupplung nach einem der vorangehenden Ansprüche, **dadurch gekennzeichnet, dass** der zweite Auflage- und Gelenkteil (18B) durch eine auf dem Deckel (12) aufgebrachte ringförmige Rippe (22) gebildet ist.

15. Verfahren zur Montage einer Kupplung nach einem der vorangehenden Ansprüche, **dadurch gekennzeichnet , dass**:
- die Membranfeder (14) in den Deckel (12) derart eingeführt wird, dass sie an dem zweiten Auflageteil (18B) zur Auflage kommt;
- das den ersten Auflageteil (18A) tragende Auflageorgan (20) wird auf dem Deckel (12) derart eingerastet, dass die Membranfeder (14) zwischen den ersten (18A) und zweiten (18B) Auflageteilen angelenkt ist.
